# EUROPÄISCHE PATENTANMELDUNG

(11) **EP 1 733 661 A1**
(43) Veröffentlichungstag der Anmeldung: **20.12.2006**
(21) Anmeldenummer: 05105298.3
(22) Anmeldetag: 16.06.2005
(51) Int. Cl.: A47J 31/44, A47B 77/08

(54) **Einbauhaushaltsgerät und Verfahren zum Einbauen eines Einbauhaushaltsgerätes**

(71) Anmelder: BSH Bosch und Siemens Hausgeräte GmbH, 81739 München (DE)
(72) Erfinder: Fugger, Michael, 83342 Tacherting (DE); Kramer, Siegmund, 83417 Kirchanschöring (DE); Ostermaier, Albert, 83371 Stein/Traun (DE)

(57) **Zusammenfassung**

Die Erfindung betrifft ein Einbauhaushaltsgerät, aufweisend eine Funktionseinheit (2) und eine in einem Aufnahmehohlraum (4) befestigbare Einbaueinrichtung (3), mit der die Funktionseinheit (2) aus dem Aufnahmehohlraum (4) herausziehbar ist. Die Einbaueinrichtung (3) umfasst eine mit dem Aufnahmehohlraum (4) befestigbare erste Teileinbaueinrichtung (8) und eine von der ersten Teileinbaueinrichtung (8) trennbare zweite Teileinbaueinrichtung (10) zur Aufnahme der Funktionseinheit (2). Die Erfindung betrifft außerdem ein Verfahren zum Einbauen eines Einbauhaushaltsgerätes (1) in einen Aufnahmenhohlraum (4), wobei das Einbauhaushaltsgerät (1) eine Funktionseinheit (2) und eine in dem Aufnahmehohlraum (4) befestigbare Einbaueinrichtung (3), mit der die Funktionseinheit (2) aus dem Aufnahmehohlraum (4) herausziehbar ist.

## Beschreibung

Die Erfindung bezieht sich auf ein Einbauhaushaltsgerät und ein Verfahren zum Einbauen eines Einbauhaushaltsgerätes.

Ein solches Einbauhaushaltsgerät ist z.B. ein Einbaukaffeevollautomat, wie er beispielsweise aus der WO 02/30240 A1, der DE 19701033 A1 oder der EP 1051941 A2 bekannt ist. Die aus der DE 19701033 A1 bekannten Einbaukaffeevollautomaten sind derart ausgeführt, dass deren Bedien- und Ausgabebereiche trennbar von den Vorrats- und Entsorgungsbereichen angeordnet sind. Die Bedien- und Ausgabebereiche sind Bestandteile einer Tür, die drehgelenkig vor den Vorrats- und Entsorgungsbereichen angeordnet ist.

Der in der EP 1051941 A2 beschriebene Einbaukaffeevollautomat umfasst eine ein Gehäuse aufweisende Geräteeinheit, die auf einem Auszug befestigt ist, und mit dessen Hilfe aus einem Aufnahmehohlraum herausgezogen werden kann, um beispielsweise Bohnen oder Wasser nachzufüllen oder Reparaturen vorzunehmen. Das Gehäuse umfasst einen Frontbereich, der als integraler Bestandteil der Front des Einbaukaffeevollautomaten ausgebildet ist. Durch die integrale Ausführung dieses Einbaukaffeevollautomaten muss z.B. bei einer Reparatur im Wesentlichen der gesamte Einbaukaffeevollautomat ausgebaut und für die Reparatur eingeschickt werden.

Der Erfindung liegt die Aufgabe zugrunde, ein Einbauhaushaltsgerät mit einer Einbaueinrichtung derart auszuführen, dass deren Montage erleichtert wird. Eine weitere Aufgabe der Erfindung ist es, ein Verfahren zum Montieren eines Einbauhaushaltsgerätes anzugeben, mit dem der Einbau des Einbauhaushaltsgerätes in einen Aufnahmenhohlraum vereinfacht wird.

Die Aufgabe wird gelöst durch ein Einbauhaushaltsgerät, aufweisend eine Funktionseinheit und eine in einem Aufnahmehohlraum befestigbare Einbaueinrichtung, mittels der die Funktionseinheit aus dem Aufnahmehohlraum herausziehbar ist, dadurch gekennzeichnet, dass die Einbaueinrichtung eine mit dem Aufnahmehohlraum befestigbare erste Teileinbaueinrichtung und eine von der ersten Teileinbaueinrichtung trennbare zweite Teileinbaueinrichtung zur Aufnahme der Funktionseinheit umfasst.

Einbauhaushaltsgeräte können relativ schwer sein, z.B. kann ein Einbaukaffeevollautomat insgesamt ein Gewicht von ca. 20 kg haben und muss gewöhnlich in einer Höhe von 1 m bis 1,5 m (Unterkante) eingebaut werden. Daher ist es relativ schwer, einen solchen Einbaukaffeevollautomat in einem Stück in den Aufnahmehohlraum ein- und auszubauen, auch da der gesamte Einbaukaffeevollautomat während des Einbaus relativ kippgefährdet sein kann. Dadurch, dass erfindungsgemäß die Einbaueinrichtung zwei von einander trennbare Teileinbaueinrichtungen umfasst, ist es möglich, zunächst die erste Teileinbaueinrichtung in dem Aufnahmehohlraum zu befestigen und anschließend die zur Aufnahme der Funktionseinheit vorgesehene zweite Teileinbaueinrichtung mit der ersten Teileinbaueinrichtung zu verbinden.

Die Verbindung der beiden Teileinbaueinrichtungen ist dann besonders einfach, wenn die zweite Teileinbaueinrichtung mit der ersten Teileinbaueinrichtung über eine selbsttätig herstellbare Verbindung verbindbar ist, wie es nach einer Variante des erfindungsgemäßen Einbauhaushaltsgerätes vorgesehen ist. Die selbsttätig herstellbare Verbindung umfasst dabei bevorzugt eine Schnapp- oder Rastverbindung.

Gemäß einer Ausführungsform des erfindungsgemäßen Einbauhaushaltsgerätes wird die zweite Teileinbaurichtung mit der ersten Teileinbaueinrichtung über eine von außen zugängliche Schraubverbindung verbunden. Die Schraubverbindung bietet eine erhöhte Festigkeit und kann als Sicherung zusätzlich zur Schnapp- oder Rastverbindung bzw. alternativ dazu verwendet werden.

Nach einer Ausführungsform des erfindungsgemäßen Einbauhaushaltsgerätes umfasst die erste Teileinbaueinrichtung eine Auszieheinrichtung und insbesondere ist die zweite Teileinbaurichtung über die selbsttätig herstellbare Verbindung mit der Auszieheinrichtung verbindbar.

Nach einer weiteren Variante des erfindungsgemäßen Einbauhaushaltsgerätes umfasst die zweite Teileinbaurichtung einen Träger, auf dem die Funktionseinheit montierbar ist, wodurch die Montage des Einbauhaushaltsgerätes weiter vereinfacht wird.

Gemäß einer weiteren Ausführungsform des erfindungsgemäßen Einbauhaushaltsgerätes umfasst die zweite Teileinbaurichtung eine Befestigungsvorrichtung für eine Frontblende. Die Befestigungsvorrichtung für die Frontblende umfasst insbesondere Winkelprofile.

Für eine verbesserte Frontblende ist es gemäß Ausführungsformen des erfindungsgemäßen Einbauhaushaltsgerätes vorgesehen, dass die Frontblende einen versteifenden Frontrahmen aufweist, mit dem die Frontblende an der Befestigungsvorrichtung für die Frontblende montierbar ist und/oder dass die Frontblende eine Abdeckung umfasst, die den Aufnahmehohlraum zuzüglich eines Überlappungsbereichs überdeckt.

Weist die erste Teileinbaueinrichtung zwei Seitenwände auf, die insbesondere mit wenigstens einer Querstrebe verbunden sind, wie dies nach einer bevorzugten Variante des erfindungsgemäßen Einbauhaushaltsgerätes vorgesehen ist, so bewirkt die Einbauvorrichtung eine Versteifung des Aufnahmehohlraums, so dass z.B. auch bei aus Spanplatten aufgebauten Küchenmöbeln eine sichere Montage möglich ist.

Gemäß einer weiteren Ausführungsform des erfindungsgemäßen Einbauhaushaltsgerätes stellt die erste Teileinbaueinrichtung einen Einbaurahmen dar.

Bei dem erfindungsgemäßen Einbauhaushaltsgerät handelt es sich insbesondere um eine Brühgetränkemaschine und insbesondere um einen Einbaukaffeevollautomaten.

Die zweite Aufgabe der Erfindung wird gelöst durch ein Verfahren zum Einbauen eines Einbauhaushaltsgerätes in einen Aufnahmenhohlraum, wobei das Einbauhaushaltsgerät eine Funktionseinheit und eine in dem Aufnahmehohlraum befestigbare Einbaueinrichtung, mittels der die Funktionseinheit aus dem Aufnahmehohlraum herausziehbar ist, umfasst, aufweisend folgende Verfahrensschritte:
- Befestigen einer erste Teileinbaueinrichtung der Einbaueinrichtung in dem Aufnahmehohlraum, wobei die erste Teileinbaueinrichtung eine Auszieheinrichtung umfasst, und
- Verbinden einer zweite Teileinbaueinrichtung der Einbaueinrichtung, die zur Aufnahme der Funktionseinheit vorgesehen ist.

Vorteilhafte Ausgestaltungen ergeben sich aus den Unteransprüchen.

Ein Ausführungsbeispiel in Form eines Einbaukaffeevollautomaten wird nachfolgend anhand der schematischen Zeichnungen exemplarisch näher erläutert. Es zeigen:
- Fig. 1: einen fertig montiertnr Einbaukaffeevollautomat in ausgezogener Stellung und
- Fig. 2: Bestandteile des Einbaukaffeevollautomaten gemäß Fig. 1 in perspektivischer, auseinandergezogener Darstellung.

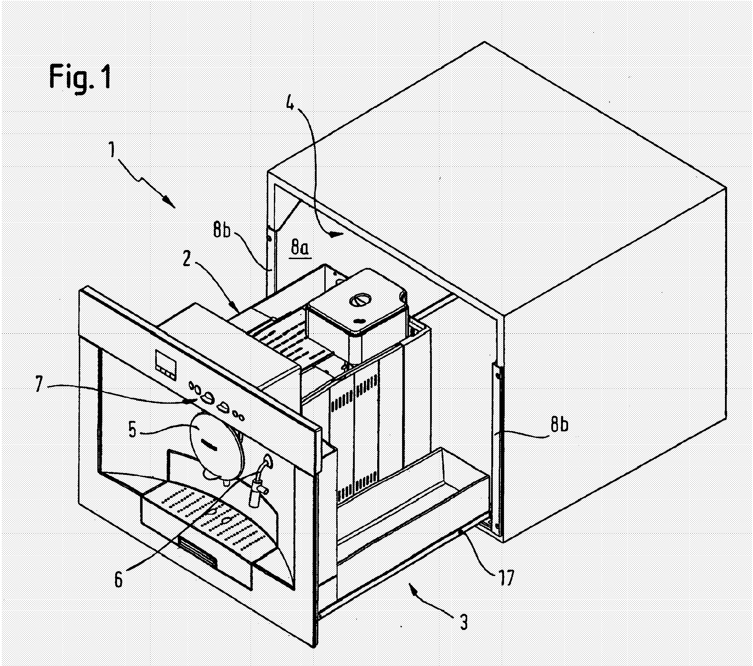

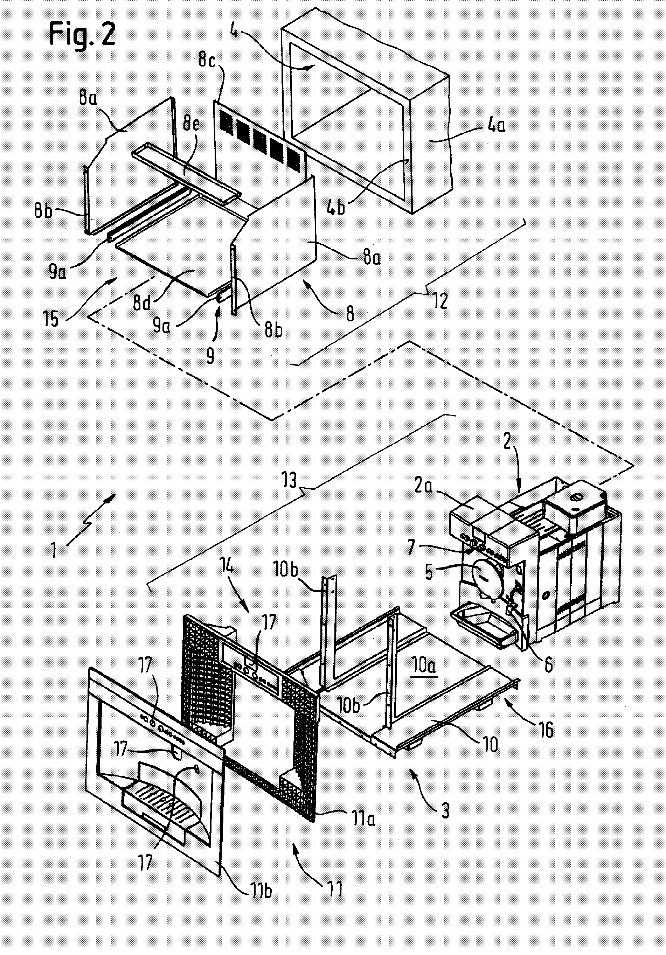

Die Fig. 1 zeigt ein Einbauhaushaltsgerät, das im Falle des vorliegenden Ausführungsbeispiels ein Einbaukaffeevollautomat 1 ist. Der Einbaukaffeevollautomat 1 umfasst eine in der Fig. 2 näher dargestellte Funktionseinheit 2, die im Wesentlichen einen funktionstüchtigen Kaffeevollautomaten mit den wesentlichen Ein- und Ausgabemitteln umfasst. Die Funktionseinheit 2 umfasst einen Korpus 2a, der als Einheit zumindest aller wesentlicher Funktionsbereiche ausgebildet ist, die für die gewünschte Funktion des Einbaukaffeevollautomaten notwendig oder wünschenswert sind. Im Falle einer Kaffeemaschine sind dies beispielsweise die Brüheinrichtung, die Versorgung mit Wasser, die Heizung, die Versorgung mit Kaffeemehl, die Entsorgung des ausgelaugten Kaffeesatzes, die Steuerung und/oder die Bedienung. Zum Ausgeben der gewünschten Getränke und Flüssigkeiten sind am Korpus 2a ein Kaffeeauslaufteil 5 und zumindest ein Dampfauslass 6, gegebenenfalls mit Anschlussstutzen zum Aufschäumen von Milch, sowie die üblichen Bedienund Anzeigeelemente 7 angeordnet. Als Funktionseinheit 2 wird im Falle des vorliegenden Ausführungsbeispiels ein Kaffeevollautomat eingesetzt, wie er im Wesentlichen auch als Standgerät eingesetzt werden kann, jedoch mit kleinen Modifikationen, wie beispielsweise die Entfernung des äußeren Gehäuses und/oder der Austausch einer Sichtblende, wie dies nachfolgend noch erläutert werden wird. Da Einbau-Haushaltsgeräte im Hinblick auf ihren Platzbedarf nicht so beschränkt sind, wie dies freistehende Geräte, insbesondere freistehende Kaffeevollautomaten sind, ist es weiterhin möglich, den verfügbaren Platz beispielsweise von serienmäßig in Küchenmöbeln vorgesehenen Aufnahmehohlräumen 4 von beispielsweise 450 mm Höhe und 560 mm bis 568 mm Breite voll auszunutzen, um zumindest die Bestandteile der Bevorratungsfunktion, wie beispielsweise Wassertank oder Kaffeebehälter, zu vergrößern.

Die Funktionseinheit 2 ist über eine Einbaueinrichtung 3 in einem Aufnahmehohlraum 4 herausziehbar aufgenommen. Der Aufnahmehohlraum 4 kann, wie bereits erwähnt, in einem Küchenmöbel vorgesehen werden, kann jedoch auch überall dort vorgesehen sein, wo ein Einbau eines Haushaltsgeräts sinnvoll und gewünscht ist, beispielsweise in Wandverkleidungen, Wandnischen oder dgl.

Die Einbaueinrichtung 3 umfasst im Falle des vorliegenden Ausführungsbeispiels einen Einbaurahmen 8, der in den Aufnahmehohlraum 4 so eingepasst ist, dass er die Wandung 4a des Aufnahmehohlraums 4 versteift und verstärkt. Der Einbaurahmen 8 umfasst zu diesem Zweck zwei Seitenwandungen 8a, die an den Seitenwandungen des Aufnahmehohlraums 4 anliegen und die mit Winkelstegen 8b versehen sind, mit denen sie über Stirnflächen 4b der Wandung 4a greifen, wie dies auch in Fig. 1 näher gezeigt ist. Der Einbaurahmen 8 umfasst weiterhin eine Rückwand 8c, die im Falle des vorliegenden Ausführungsbeispiels mit Lüftungsschlitzen versehen ist und die rückwärtige Begrenzung des Aufnahmehohlraumes 4 bildet. Die Rückwand 8c erstreckt sich zwischen den beiden Seitenwänden 8a und ist mit diesen verbunden. Der Einbaurahmen 8 umfasst weiterhin einen Boden 8d, der sich ebenfalls zwischen den beiden Seitenwänden 8a erstreckt und mit diesen verbunden ist. Der Einbaurahmen 8 umfasst im Falle des vorliegenden Ausführungsbeispiels hin eine Querstrebe 8e, die sich in der Nähe der Winkelstege 8b und an der dem Boden 8d gegenüberliegenden Seite zwischen den Seitenwänden 8a erstreckt und mit diesen verbunden ist.

Der Boden 8d bildet die Montagegrundlage einer Auszieheinrichtung 9, die zum Herausziehen der Funktionseinheit 2 aus dem Aufnahmehohlraum 4 zu Bedienungs-, Wartungs- und/oder Montagezwecken dient.

Die Auszieheinrichtung 9 umfasst im dargestellten Ausführungsbeispiel handelsübliche Auszugsschienen 9a, im Falle des vorliegenden Ausführungsbeispiels Teleskopschienen (Vollauszug). Die Schienen 9a sind im vorbestimmten Abstand auf dem Boden 8d des Einbaurahmens 8 befestigt, wie dies durch die spezielle Konstruktion der verwendeten Schiene 9a vorgegeben ist.

Die Einbaueinrichtung 3 umfasst im Falle des vorliegenden Ausführungsbeispiels einen Träger 10, auf dem die Funktionseinheit 2 befestigt ist. Der Träger 10 umfasst einen Boden 10a, der jedoch nicht unbedingt als Platte ausgebildet sein muss, sondern lediglich die zur Unterstützung der Funktionseinheit 2 und gegebenenfalls von weiterem Zubehör notwendigen Standflächen sowie Montage- und/oder Auflageflächen für die Schiene 9a bieten soll. Vom Träger 10 stehen im Falle des vorliegenden Ausführungsbeispiels Tragschienen 10b vor, die der korrekten Positionierung der Funktionseinheit 2 auf dem Träger 10 und gegebenenfalls der Befestigung der Funktionseinheit 2 am Träger 10 dienen. Der Träger 10 ist somit eine Art Schlitten, mit dem die Funktionseinheit 2 auf den Schienen 9a ausziehbar ist.

Die Einbaueinrichtung 3 umfasst eine Sichtblende 11, die im dargestellten Ausführungsbeispiel einen versteifenden Frontrahmen 11a und eine Design-Abdeckung 11b aufweist. Zumindest die Abdeckung 11 b ist im Falle des vorliegenden Ausführungsbeispiels so bemessen, dass sie den Aufnahmehohlraum 4 zuzüglich eines Überlappungsbereichs überdeckt. Frontrahmen 11a und Abdeckung 11b weisen geeignete Durchtrittsöffnungen 17 für die Auslässe 5 und 6 sowie die Bedien- und Anzeigeelemente 7 der Funktionseinheit 2 auf, so dass diese, wie in der Fig. 1 dargestellt, am fertig montierten Einbaukaffeevollautomaten 1 von außen zugänglich sind.

Im Falle des vorliegenden Ausführungsbeispiels ist ferner an dem hinteren Teil des Einbaurahmens 8 in nicht dargestellter Weise eine Stromversorgung für die Funktionseinheit 2 angeordnet. Die Stromversorgung umfasst im Wesentlichen eine Steckdose, die ihrerseits mit einem Stromkabel mit einer externen Steckdose für den Betrieb des Einbaukaffeevollautomaten verbunden ist. Die Funktionseinheit 2 umfasst im Falle des vorliegenden Ausführungsbeispiels ein in den Figuren nicht dargestelltes Stromkabel, das dafür vorgesehen ist, mit der an dem Einbaurahmen angeordneten Steckdose verbunden zu werden. Das Stromkabel der Funktionseinheit 2 ist im Falle des vorliegenden Ausführungsbeispiels ein Spiralkabel.

Anstelle der in den Figuren gezeigten Sichtblende 11 können auch andere Sichtblenden, die sich insbesondere im Design von der Sichtblende 11 unterscheiden, verwendet werden.

Nachfolgend wird die Montage des in den Figuren 1 und 2 dargestellten Einbaukaffeevollautomaten 1 beschrieben.

Zunächst wird der Einbaurahmen 8 mit dem Aufnahmehohlraum 4 zu einer ersten Montageeinheit 12 verbunden. Zu diesem Zweck wird der Einbaurahmen 8 mit seinen Bestandteilen zusammengebaut und im Aufnahmehohlraum 4 befestigt. Je nach Konstruktion der Auszieheinrichtung 9 können bereits die Schienen 9a der Auszieheinrichtung 9 am Einbaurahmen 8 befestigt werden.

Anschließend wird eine zweite Montageeinheit 13 montiert. Die zweite Montageeinheit 13 umfasst bevorzugt die Funktionseinheit 2, den Träger 10 und die Sichtblende 11. Die Montageeinheit 13 kann somit auf einem Arbeitsplatz montiert werden, so dass das Gewicht der Funktionseinheit 2 gut abgestützt ist. Beim Zusammenbau der zweiten Montageeinheit 13 wird die Funktionseinheit 2 auf dem Träger 10 in der vorbestimmten Position befestigt, bevorzugt angeschraubt.

Zum Montieren der Sichtblende 11 werden bevorzugt Befestigungselemente eingesetzt, die beispielsweise die Ausläufe 5 und 6 mit der Funktionseinheit 2 verbinden. Zu diesem Zweck wird im Falle des vorliegenden Ausführungsbeispiels der Korpus 2a der Funktionseinheit 2, entgegen der Darstellung in Fig. 2, auf dem Träger 10 mit abgenommenen Ausläufen 5 und 6 befestigt, und die Ausläufe 5, 6 werden anschließend unter Zwischenlegung der Sichtblende 11 am Korpus 2a der Funktionseinheit 2 befestigt. Im dargestellten Ausführungsbeispiel ist der Kaffeeauslauf 5 in nicht dargestellter Weise mit dem Korpus 2a der Funktionseinheit 2 verschraubt, während der Dampfauslass 6 mit einer Steckverbindung mit dem Korpus 2a verbunden wird. Entsprechende Aussparungen 17 sorgen dafür, dass beim Anschrauben des Kaffeeauslasses 5 und beim Einstecken des Dampfauslasses 6 gleichzeitig die Abdeckung 11b und der Frontrahmen 11a am Korpus des Funktionsteils 2 befestigt werden. Zusätzlich oder alternativ kann die Sichtblende 11 auch am Träger 10, beispielsweise den Winkelschienen 10b, befestigt, bevorzugt verschraubt, werden.

Die Befestigung der Sichtblende 11 an der Funktionseinheit 2 bildet somit eine Montageschnittstelle 14, die es gestattet, dass eine Funktionseinheit 2 eingesetzt wird, die so wenig wie möglich gegenüber einer Funktionseinheit geändert werden muss, wie es für einen freistehenden Kaffeevollautomaten verwendet wird.

Ist die zweite Montageeinheit 13 montiert, so wird die zweite Montageeinheit 13 über eine Montageschnittstelle 15 an der ersten Montageeinheit 12 befestigt. Die Montageschnittstelle 15 befindet sich bevorzugt im Bereich der Auszieheinrichtung 9, und dort insbesondere zwischen den Schienen 9a und dem Träger 10, wobei jedoch, je nach konstruktiver Ausgestaltung der Schiene 9a, ein nicht gezeichnetes Gegenelement am Träger 10 angeordnet sein kann, durch das die Verbindung bewirkt wird. Die Montageschnittstelle 15 umfasst bevorzugt eine sich im Wesentlichen selbsttätig herstellende Verbindung, wie beispielsweise eine Schnappverbindung 16 oder eine Rastverbindung, die eine Verbindung der beiden Montageeinheiten 12 und 13 bewirkt, sobald die beiden Montageinheiten 12, 13 in ihrer korrekten Position zueinander angeordnet sind. Eine derartige Schnappverbindung 16 ist bei vielen herkömmlichen Teleskopschienen vorgegeben.

Zusätzlich oder alternativ kann im Bereich der Montageschnittstelle 15 eine Sicherungsverbindung 17 (Fig. 1) vorgesehen sein, die bevorzugt als Verschraubung ausgebildet und bevorzugt zwischen dem Träger 10 und der Schiene 9 vorgesehen ist. Diese Sicherungsverbindung 17 ist besonders dort zweckmäßig, wo eine Funktionseinheit 2 mit höherem Gewicht eingesetzt wird und ist an einer Stelle angeordnet, die gut von außen zugänglich ist, z.B. wie in Fig. 1 seitlich am Träger 10.

In Abwandlung des beschriebenen und gezeichneten Ausführungsbeispiels kann der Einbaurahmen lediglich auf seine aussteifende Funktion beschränkt werden, beispielsweise dann, wenn im Aufnahmehohlraum eine eigene Rückwand vorhanden oder die Funktionseinheit bereits mit einem Gehäuse versehen ist. Die Erfindung ist ebenfalls nicht auf den Einbau eines Kaffeevollautomaten beschränkt, sondern kann für alle Einbau-Haushaltsgeräte, insbesondere solche mit höherem Gewicht, eingesetzt werden. Die Auszieheinrichtung kann jede andere geeignete Form aufweisen, und die verwendeten Schienen können an anderer Stelle, beispielsweise den Seiten oder der Abdeckung des Aufnahmehohlraums, angeordnet sein. Als Funktionseinheit kann auch ein für einen Freistand konstruiertes Haushaltsgerät verwendet werden, das gegebenenfalls mit einer neuen Sichtblende bzw. mit Abdichtungen zum Hohlraum hin versehen wird. Die Anordnung der Schnittstelle zwischen dem Korpus der Funktionseinheit und der Sichtblende ist auch bei Einbaugeräten sinnvoll, die keine Auszieheinrichtung und/oder keinen Einbaurahmen aufweisen, da diese Konstruktion kaum Änderungen an einem Standard-Freistand-Gerät erfordert, um dieses zum Einbauen umzurüsten.

## Patentansprüche

1. Einbauhaushaltsgerät, aufweisend eine Funktionseinheit (2) und eine in einem Aufnahmehohlraum (4) befestigbare Einbaueinrichtung (3), mittels der die Funktionseinheit (2) aus dem Aufnahmehohlraum (4) herausziehbar ist, **dadurch gekennzeichnet, dass** die Einbaueinrichtung (3) eine mit dem Aufnahmehohlraum (4) befestigbare erste Teileinbaueinrichtung (8) und eine von der ersten Teileinbaueinrichtung (8) trennbare zweite Teileinbaueinrichtung (10) zur Aufnahme der Funktionseinheit (2) umfasst.

2. Einbauhaushaltsgerät nach Anspruch 1, **dadurch gekennzeichnet, dass** die zweite Teileinbaueinrichtung (10) mit der ersten Teileinbaueinrichtung (8) über eine selbsttätig herstellbare Verbindung (16) verbindbar ist.

3. Einbauhaushaltsgerät nach Anspruch 2, **dadurch gekennzeichnet, dass** die selbsttätig herstellbare Verbindung eine Schnapp- oder Rastverbindung (16) umfasst.

4. Einbauhaushaltsgerät nach einem der Ansprüche 1 bis 3, **dadurch gekennzeichnet, dass** die zweite Teileinbaurichtung (10) mit der ersten Teileinbaueinrichtung (8) über eine von außen zugängliche Schraubverbindung (17) verbindbar ist.

5. Einbauhaushaltsgerät nach einem der Ansprüche 1 bis 4, **dadurch gekennzeichnet, dass** die erste Teileinbaueinrichtung (8) eine Auszieheinrichtung (9) umfasst.

6. Einbauhaushaltsgerät nach einem der Ansprüche 2 bis 5, **dadurch gekennzeichnet, dass** die zweite Teileinbaurichtung (10) über die selbsttätig herstellbare Verbindung (16) mit der Auszieheinrichtung (9) verbindbar ist.

7. Einbauhaushaltsgerät nach einem der Ansprüche 1 bis 6, **dadurch gekennzeichnet, dass** die zweite Teileinbaurichtung (10) einen Träger (10a) umfasst, auf dem die Funktionseinheit (2) montierbar ist.

8. Einbauhaushaltsgerät nach einem der Ansprüche 1 bis 7, **dadurch gekennzeichnet, dass** die zweite Teileinbaurichtung (10) eine Befestigungsvorrichtung (10b) für eine Frontblende (11) umfasst.

9. Einbauhaushaltsgerät nach Anspruch 8, **dadurch gekennzeichnet, dass** die Befestigungsvorrichtung für die Frontblende (11) Winkelprofile (10b) umfasst.

10. Einbauhaushaltsgerät nach Anspruch 8 oder 9, **dadurch gekennzeichnet, dass** die die Frontblende (11) einen versteifenden Frontrahmen (11a) aufweist, mit dem die Frontblende (11) an der Befestigungsvorrichtung (10b) für die Frontblende (11) montierbar ist.

11. Einbauhaushaltsgerät nach einem der Ansprüche 8 oder 10, **dadurch gekennzeichnet, dass** die die Frontblende (11) eine Abdeckung (11 b) umfasst, die den Aufnahmehohlraum (4) zuzüglich eines Überlappungsbereichs überdeckt.

12. Einbauhaushaltsgerät nach einem der Ansprüche 1 bis 11, **dadurch gekennzeichnet, dass** die erste Teileinbaueinrichtung (8) zwei Seitenwände (8a) aufweist.

13. Einbauhaushaltsgerät nach Anspruch 12, **dadurch gekennzeichnet, dass** die Seitenwände (8a) mit wenigstens einer Querstrebe (8e) verbunden sind.

14. Einbauhaushaltsgerät nach einem der Ansprüche 1 bis 13, **dadurch gekennzeichnet, dass** die erste Teileinbaueinrichtung (8) einen Einbaurahmen darstellt.

15. Einbauhaushaltgerät nach einem der Ansprüche 1 bis 14, **dadurch gekennzeichnet, dass** das Einbauhaushaltgerät eine Brühgetränkemaschine (1) ist.

16. Einbauhaushaltsgerät nach Anspruch 15, **dadurch gekennzeichnet, dass** die Brühgetränkemaschine ein Einbaukaffeevollautomat (1) ist.

17. Verfahren zum Einbauen eines Einbauhaushaltsgerätes (1) in einen Aufnahmenhohlraum (4), wobei das Einbauhaushaltsgerät (1) eine Funktionseinheit (2) und eine in dem Aufnahmehohlraum (4) befestigbare Einbaueinrichtung (3), mit der die Funktionseinheit (2) aus dem Aufnahmehohlraum (4) herausziehbar ist, umfasst, aufweisend folgende Verfahrensschritte:
- Befestigen einer erste Teileinbaueinrichtung (8) der Einbaueinrichtung (3) in dem Aufnahmehohlraum (4), wobei die erste Teileinbaueinrichtung (8) eine Auszieheinrichtung (9) umfasst und
- Verbinden einer zweite Teileinbaueinrichtung (10) der Einbaueinrichtung (3), die zur Aufnahme der Funktionseinheit (2) vorgesehen ist.

18. Verfahren nach Anspruch 17, bei dem die zweite Teileinbaueinrichtung (10) mit der ersten Teileinbaueinrichtung (8) über eine selbsttätig herstellbare Verbindung (16) verbunden wird.

19. Verfahren nach Anspruch 18, bei dem die selbsttätig herstellbare Verbindung eine Schnapp- oder Rastverbindung (16) umfasst.

20. Verfahren nach einem der Ansprüche 17 bis 19, bei dem die zweite Teileinbaurichtung (10) mit der ersten Teileinbaueinrichtung (8) über eine von außen zugängliche Schraubverbindung (17) verbunden wird.

21. Verfahren nach einem der Ansprüche 17 bis 20, bei dem nach dem Verbinden der zweite Teileinbaueinrichtung (10) mit der ersten Teileinrichtung (8) die Funktionseinheit (2) mit der zweiten Teileinbaueinrichtung verbunden wird.

22. Verfahren nach einem der Ansprüche 17 bis 21, bei dem das Einbauhaushaltgerät eine Brühgetränkemaschine (1) ist.

23. Verfahren nach Anspruch 22, bei dem die Brühgetränkemaschine ein Einbaukaffeevollautomat (1) ist.
